# EUROPEAN PATENT APPLICATION

(11) **EP 1 353 321 A2**
(43) Date of publication of application: **15.10.2003**
(21) Application number: 03007469.4
(22) Date of filing: 04.04.2003
(51) Int. Cl.: G09G 5/14

(54) **Content based window filtering for simultaneous display of multiple high-quality video and graphics windows**

(30) Priority: 08.04.2002 US 371249 P; 25.03.2003 US 396752 P
(71) Applicant: MATSUSHITA ELECTRIC INDUSTRIAL CO., LTD., Kadoma-shi, Osaka 571-8501 (JP)
(72) Inventor: Nasoff, David G., Cherry Hill, New Jersey 08034 (US); Shields, Jerome D., Mount Holly, New Jersey 08060 (US)
(74) Representative: Schwabe - Sandmair - Marx

(57) **Abstract**

A system for concurrently displaying multiple images, such as multiple video images, multiple graphics images, and multiple text images. Each image may be subject to a different adaptive filtering operation. The system uses multiple converters or other filters that are coupled to respectively different sources of signals and a processor to combine the signals provided by the various format converters or filters. A computer controls the format converters, the filters, and the merging processor. The combined signals developed by the merging processor are provided to a single display device.

## Description

### CROSS REFERENCE TO RELATED APPLICATION

This application claims the benefit under Title 35 U.S.C. § 119(e) of United States Provisional Application No. 60/371,249 filed on April 8, 2002, the contents of which are incorporated herein by reference.

### FIELD OF THE INVENTION

The present invention relates to a system for displaying graphics and video images on a single display. More particularly, it relates to a system for concurrently displaying multiple images where each image may be subject to a different filtering operation.

### BACKGROUND OF THE INVENTION

Presentation of graphics and video on a single display is currently performed with little consideration of the differences between these two types of visual content and, in particular, the distinct filtering requirements of each. For example, to avoid aliasing distortion, high quality video signals are desirably band-limited according to the size and resolution of the display device and according to any resizing performed on the video itself. To produce high resolution resized images, it is desirable to use filters having sharp breakpoints. Graphics images subject to this type of filtering, however, may suffer severe ringing distortion.

### SUMMARY OF THE INVENTION

The present invention is embodied in a system for concurrently displaying multiple images, including multiple video images, multiple graphics images, and multiple text images, where each image may be subject to a respectively different filtering operation in order to provide a relatively high quality image including both video and graphics content. The system includes multiple format converters, or other filters each coupled to a respectively different source of signal, a merging processor that combines the signals provided by the various format converters or filters, and a computer that controls the format converters, filters, and the merging processor. The combined signals developed by the merging processor are provided to a display device.

### BRIEF DESCRIPTION OF THE DRAWINGS

Fig. 1 is a block diagram of an exemplary system according to the present invention.

Fig. 2A is an image diagram showing multiple windows displayed on the display device of Fig. 1.

Fig 2B is an image of an optional menu system that may be used to select filtering or other effects for any of the windows shown in Fig. 2A.

Fig. 3 is a block diagram of another embodiment of the system according tc the present invention.

Fig. 4 is a block diagram of yet another embodiment of the system according to the present invention.

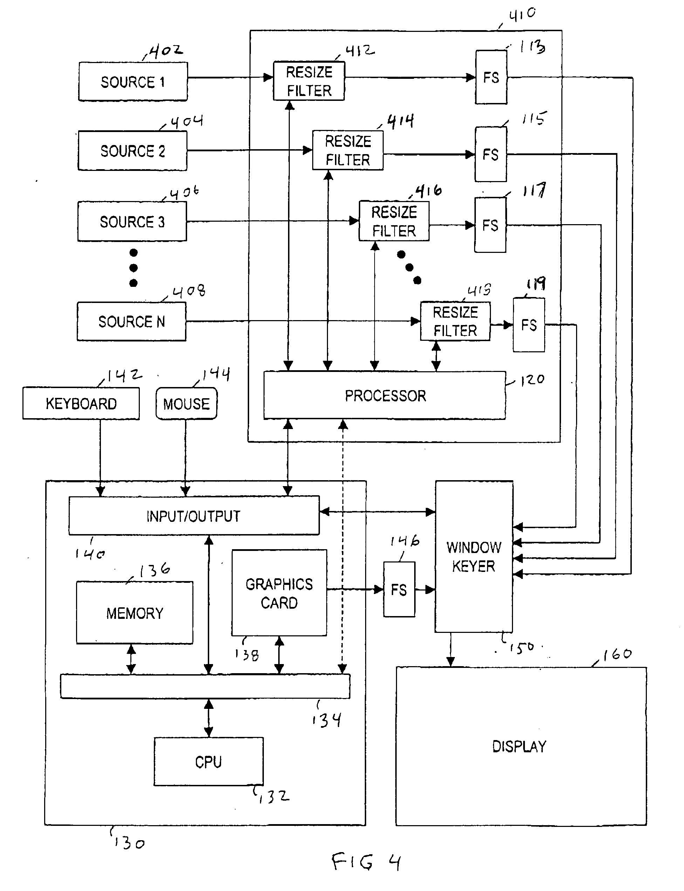

Fig, 5A is block diagram of an adjustable filter that can be used with the embodiment of the system shown in Fig. 4.

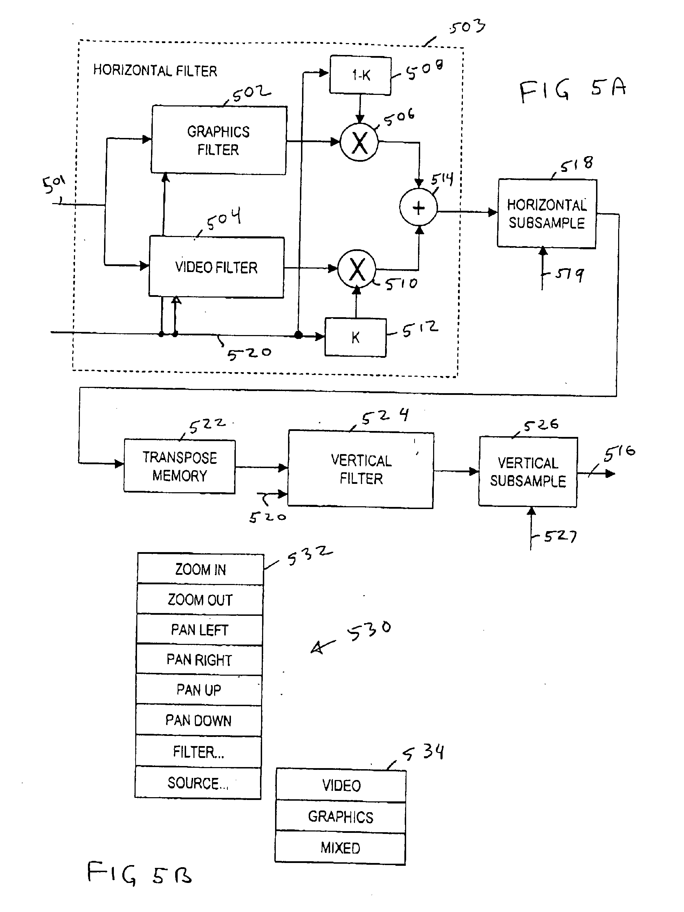

Fig. 5B is an image of a menu system that may be used to select the parameters or other effects for any of the windows shown in Fig. 2A for a video system employing the filter shown in Fig. 5A.

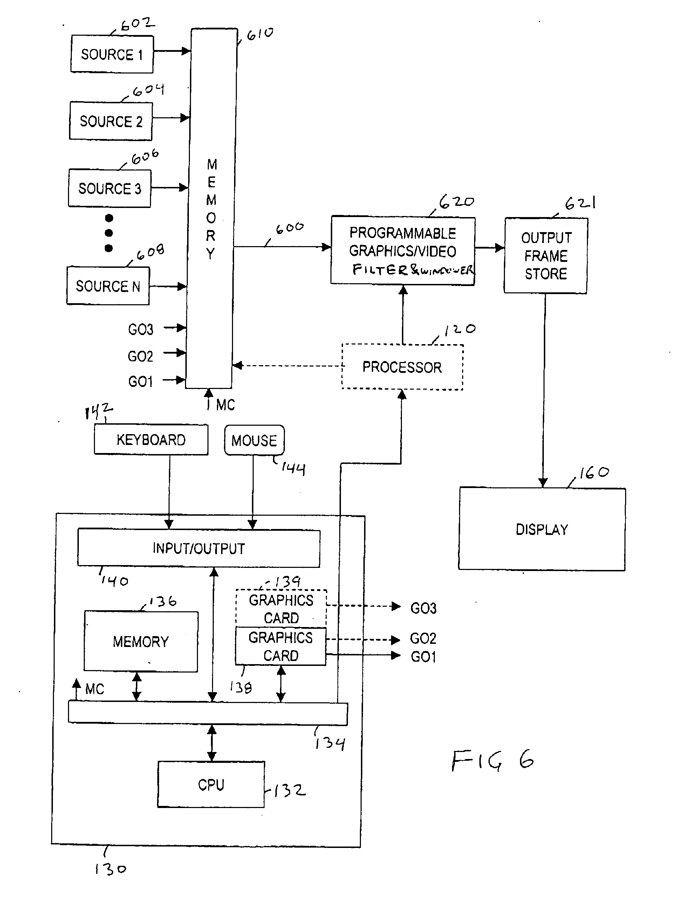

Fig. 6 is a block diagram of yet another embodiment of the system according to the present invention in which a single filter is used to process all of the component images.

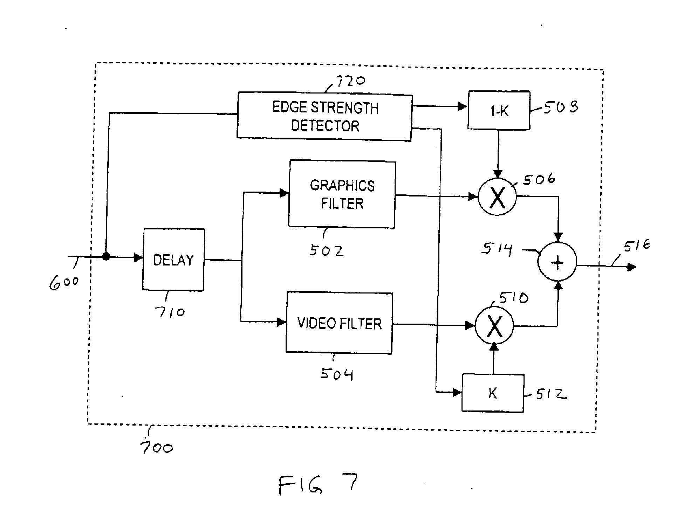

Fig. 7 is a block diagram of a filter that may be used to perform the filtering used in the embodiment shown in Fig. 6.

### DETAILED DESCRIPTION

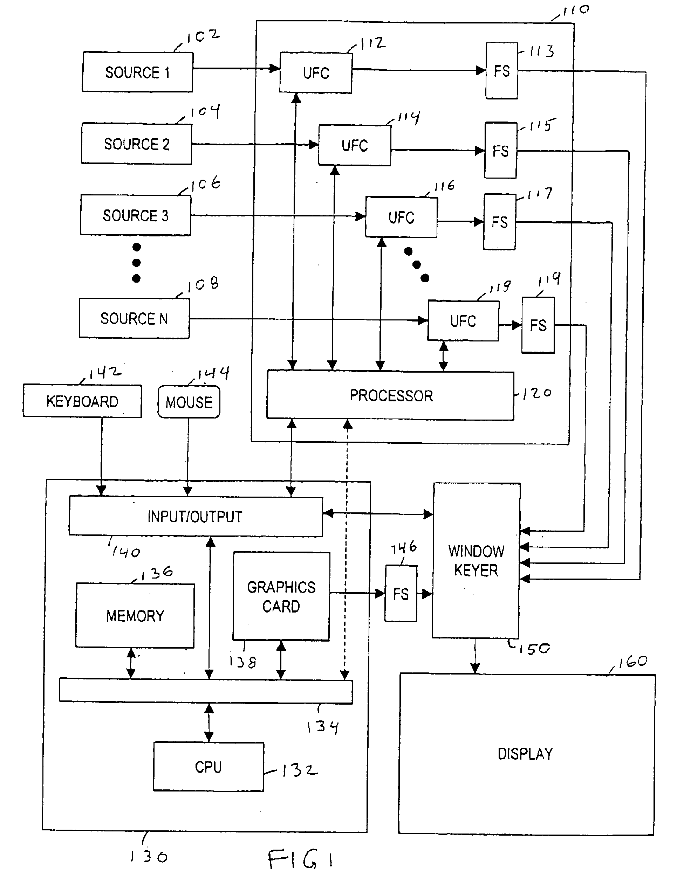

The present invention, as shown in Fig. 1, may receive video signals from multiple video sources. Video source 102 may be, for example, a conventional video cassette recorder. Source 104 may be a connection to a global information network (e.g., the Internet), providing a streaming video signal. Source 106 may be a conventional PC camera. In general, the sources 102-108 may be any device that provides a video signal, a graphics signal or a still image signal. As used herein, the term "graphics signal" includes signals provided by a character generator.

In the exemplary embodiment of the invention, each of the video sources 102, 104, 106 and 108 is coupled to a respective format converter 112, 114, 116 and 118 of a format conversion device 110. Although only four video sources and four format converters are shown in Fig. 1, it is contemplated that more or fewer video sources may be used and more or fewer format converters may be used. In the exemplary embodiment of the invention, the format converters 112, 114, 116 and 118 may be, for example, universal format converters such as are disclosed in U.S. patent no. 5,587,742 entitled FLEXIBLE PARALLEL PROCESSING ARCHITECTURE FOR VIDEO RESIZING. They may be multi-tap interpolation filters that remove aliasing distortion by interpolating samples of the images. In addition to the band-limiting and decimating filters shown in this patent, the format converters of the subject invention may include other types of filters, such as peaking filters and filters that provide special effects, as described below.

The format converters 112, 114, 116 and 118 are controlled by a processor 120 of the device 110. The processor 120 receives information about the type of signal being received by each of the format converters and controls each format converter to process its respective video signal as specified by a computer system 130. The output signals of the exemplary format converters 112, 114, 116 and 118 and of the graphics card 138 are applied to respective frame synchronizers 113, 115, 117, 119 and 146. These frame synchronizers may be used to adjust the frame and line synchronization of the filtered video and graphics signals to match the frame and line synchronization of the display device 160. Using these frame synchronizers, the sources 102-106 and graphics card 138 may operate completely independently of each other.

The synchronized processed video signals provided by the format conversion device 110 and the graphics card 138 of the computer 130 are applied to a window keyer 150 which merges the various signals with a video signal provided by a graphics processor 138 of the computer 130 to provide a merged video signal that is displayed on a display device 160. In the exemplary embodiment of the invention, the display device 160 may be, for example, a high-definition television display.

The window keyer 150 used in the subject invention may be, for example, a window keyer such as is disclosed in co-pending U.S. patent application no. 09/796,962 filed March 1, 2001 and entitled METHOD AND APPARATUS FOR KEYING SECONDARY VIDEO INTO PRIMARY VIDEO. That application relates to a technique for displaying decoded television video images on a computer monitor as a window in the computer desktop display. In that application and in the exemplary embodiment of the present invention, the primary video signal may be the signal generated by the graphics processor 138 while the secondary video signals may be the signals provided by any of the various sources 102-108 through the corresponding one of the various format converters 112, 114, 116 and 118 and frame synchronizers 113, 115, 117 and 119.

In the above-referenced patent application, the video signals are merged into the graphics signal using a chroma-key mechanism. Alternatively, it is contemplated that the computer 130 may define a position and a size for each window and provide this information to the processor 120 of the format conversion device 110. The processor 120 may then pass this information on to the individual format converters 112, 114, 116 and 118 and frame synchronizers 113, 115, 117 and 119, so that each converter and synchronizer pair, along with window keyer 150, provides an output video signal with the active image timed to be displayed only in the defined window area.

The window keyer 150 also receives information from the computer 130, for example, via an output port, defining the scale and position of each window. Using this information, the window keyer 150 overlays or tiles the various windows to make a composite display, such as that shown in Fig. 2A, described below.

The exemplary computer 130 may be, for example, a conventional personal computer. It includes a central processing unit (CPU) 132, a data and address bus 134, a memory 136, a graphics processor 138 and an input/output (I/O) processor 140. The computer 130 may be controlled by any windows capable operating system (not shown) such as Microsoft® Windows, the Apples Macintosh operating system or the Unix® operating system running X-Windows. Alternatively, the CPU 132 may be a processor embedded in the display 160. In any of these systems, multiple windows may be defined and the windows may be resized, overlain and moved about the displayed image using either commands from the keyboard 142 or from the mouse 144 or from a remote control device (not shown).

When the processor 120 receives a command from the computer 130 to move, resize or filter one of the images provided from one of the image sources 102, 104. 106 and 108, it generates appropriate commands for the respective format converter 112 114, 116 and 118, causing the respective image to be moved, resized or filtered in a manner appropriate to the type of image, For example, if the computer 130 commands the processor 120 to shrink a text image, the processor 120 may command the format converter to apply a median filter to the image prior to the resize operation and a peaking filter after the resize operation in order to produce text having sharp edges. If, on the other hand, it is a video image that is being shrunk, the processor 120 may command the format converter to apply only an antialising filter appropriate to the difference in resolution between the input image and the shrunken output image.

As described below, the format converters 112, 114, 116 and 118 may include effects filters in addition to the band-limiting filters used to remove aliasing distortion and peaking filters used to sharpen the edges of a video image. These filters may, for example, provide effects such as "paint-brush," "pointillist," "block" or other effects commonly available for photographic manipulation.

In the exemplary embodiment of the invention, the operations performed by the format converters 112, 114, 116 and 118 are determined by the manipulation to be applied to the resulting graphics image as specified by the computer 130. Figure 2A is an image diagram of an exemplary screen that may be provided on the display device 160 of Fig. 1 in order to manipulate the graphics image. This screen includes four window images 210, 212, 214 and 216 on a background image 200. In this example, background image 200 is generated by the graphics processor 138. This background image may be, for example, the "desktop" or base image of a windows capable system. In the exemplary embodiment of the invention, any of the images 210, 212, 214 and 216 may be provided by any of the format converters 112, 114, 116 and 118. The image 200 is provided by the graphics processor 138 of the computer 130. The operating system of the computer 130 keeps track of the coordinates, size and level of each image. Each window may include, for example, a control box such as is shown in the upper right corner of the window 210. This control box includes icons for minimize 226, maximize 228 and close 229, as are found in windows for existing operating systems. In addition, the exemplary control box includes icons for zoom-in 220, zoom-out 222 and pan 224. In the exemplary embodiment, if one of the zoom-in or zoom-out boxes are selected then, if the user "grabs" an edge or corner of the window using, for example, the pointer controlled by the mouse 144, the size of the video information in the window changes as the edge is moved in or out. If, for example, the window is resized only horizontally, then the text is magnified only in the horizontal direction.

Alternatively, if the pan icon 224 is selected, then grabbing the edge of a window and moving it will cause the window to pan over the text rather than resizing either the window or the text within the window. Thus, through direct graphic manipulation of the display windows, the system according to the present invention can command the format converters 112, 114, 116 and 118 to appropriately and independently filter each of the received images.

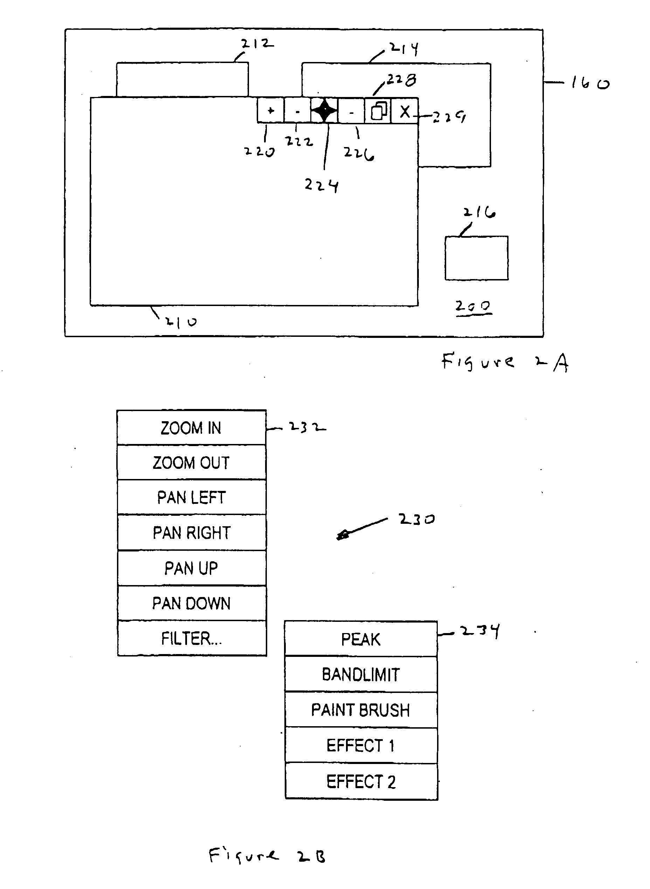

As an alternative or adjunct to the control box shown in Fig. 2A, the subject invention may employ a pull-down menu system 230 for each window, such as that shown in Fig. 2B. In this exemplary embodiment, the menu includes selections 232 for zoom-in, zoom-out, pan-left, pan-right, pan-up, pan-down and filter. The filter selection includes a sub-menu 234 that allows a user to apply a peaking filter, band limiting filter, paint brush filter or other effects filters, as shown in Fig. 2B. Again, through manipulation of the image displayed on the display device 160, the computer 130 and processor 120 of the format conversion device 110 automatically determine the type of filtering to be applied to the image, based on its type.

As an alternative to the computer 130 obtaining information about the type of image (e.g. text, video or graphic) from the image sources 102, 104, 106 and 108, the computer user may provide the information about the image types. This information can be provided by the user via keyboard 142 and input/output processor 140.

As another alternative, the computer 130 may obtain information, about the type of image from information provided when the computer controls the various sources to obtain the image data. For example, if the computer accesses streaming video from the Internet, it can automatically direct the video to a format converter. If the computer accesses text, it may automatically direct the text to a text filter. Similarly, if the computer accesses graphics, it may automatically direct it to a graphics filter.

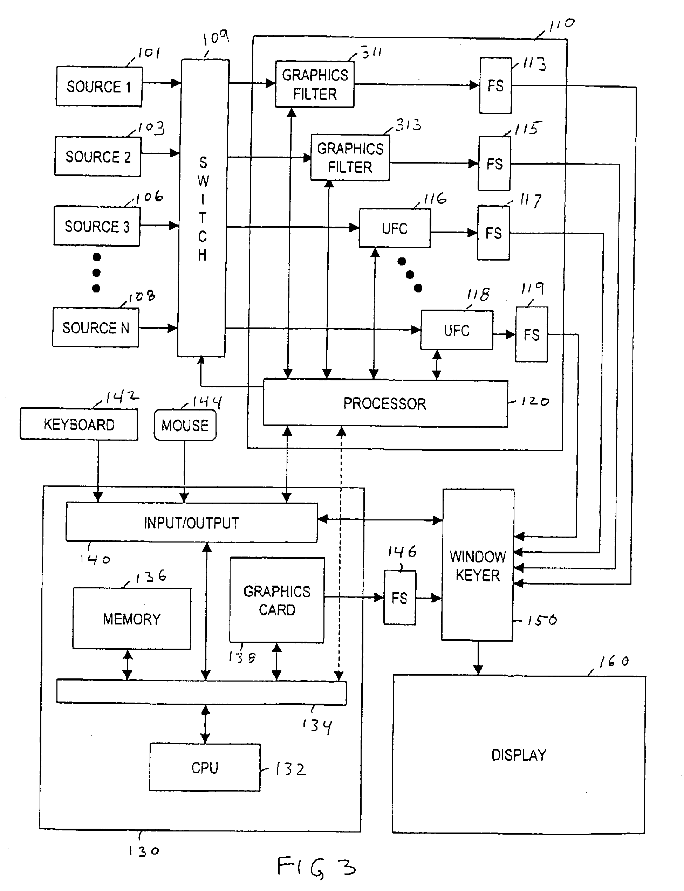

Referring to Figure 3, another embodiment of the invention is shown. In this embodiment, sources 101-108 may be video signals from multiple video sources such as, for example, a video cassette recorder, a conventional PC camera, or an Internet connection providing a streaming video signal. Alternatively, any of sources 101-108 may be graphics sources, such as another computer or sources that have text, video, and graphics, such as a video game or a graphics page from a global information network, This embodiment may use the format converters 116, 118 to filter video signals and may use graphics filters 311, 313 to filter the graphics signals. The exemplary graphics filters 311 and 313 are used for inputs from graphics sources because format converters 116, 118 may introduce ringing distortion into the filtered image. Filters 311, 313 may be low pass filters which serve to scale the signals from sources 101-108. Switch 109 may be a routing switch, such as a crosspoint switch. Accordingly, switch 109 may direct graphics signals coming from any of the sources 101-108 to any graphics filter, such as graphics filters 311 or 313. Similarly, switch 109 may direct video signals coming from any of the sources 101-108 to any format converter, such as 116 or 118. Switch 109 may be operated manually with manual control means. Alternatively, switch 109 may be operated automatically under the control of processor 120.

Filters 311 and 313 may be, for example, simple decimation filters that employ a programmable low-pass filter that is used as an anti-aliasing filter and a bilinear interpolator that combines selected samples from the input image to produce the desired resized samples. This type of format converter may be desirable for use with graphics images because it does not produce ringing distortion. This filter may be, for example, a combination of a horizontal and vertical filter coupled by a transpose memory, as shown in the above referenced U.S. Patent.

Switch 109 allows the user to choose which filter to use for each source. For example, the user could choose to use graphics filter 311 to format the input signal from source 101; or could choose to use format converter 116 to format the input signal from source 101. The user's choice will depend upon the nature of the data being received from source 101. For example, if the data is a combination of video, graphics, and text, the user can select the filter that provides the best results for the image content that is most important. If the image is a video image including a small amount of graphics and text, the user may choose one the UFC's 116 and 118 to filter the image so as to obtain the best results for the video image. If, however, the image is primarily graphics and text with incidental photographs, the graphics filter 311 and 313 may provide a better formatted image.

Referring to Figure 4, there is shown yet another embodiment of the system according to the present invention. In this embodiment, the sources may be any one of a number of kinds of sources. Any of the sources may be video sources such as a video recorder or video player, an interconnection providing a streaming video signal, or a conventional PC camera. At the same time, any of the sources may be sources of graphics, text, graphics and text, or graphics and text combined with video. In order to accommodate such a wide variety of possible input signals, format conversion device 410 may include a number of adjustable low pass filters 412, 414, 416, and 418 that adjust to the type of signals being received from sources 402, 404, 406, and 408. The system shown in Figure 4 also includes the frame synchronizers 113, 115, 117, 119 and 146 which operate in the same manner as described above with reference to Figure 1.

In this embodiment sources 402, 404, 406, and 408 need not provide predetermined kinds of signals and each resize filter may be configured to process either graphics or video data. Each of the resize filters 412, 414, 416, and 418 subsamples the signals from sources 402-408 and is sufficiently variable such that it may be adapted to filter whatever signal is provided by sources 402, 404, 406, and 408. Filters 412, 414, 416, and 418 may be independently adjusted by processor 120 to provide an appropriate output image for each source 402, 404, 406, 408 at display 160. For example, filter 412 may be controlled by processor 120 to filter the signal from source 402 whether that signal includes video, graphics or a mixture of the two.

Figure 5A is a block diagram of an exemplary adjustable resize filter 500 that may be used with the embodiment shown in Figure 4. Exemplary filter 500 may be any of the filters 412, 414, 416, 418 in Figure 4. An input signal is applied to filter 500 through line 501, which is the output signal from, for example, source 402. The input signal 501 is applied to two filters, a graphics filter 502 and a video filter 504. Graphics filter 502 may be a programmable FIR low-pass filter having a small number of taps (e.g. five or less), that provides a frequency response characteristic having a relatively wide transition band between the pass band and the stop band. Video filter 504 may be a multitap programmable FIR filter having a narrow transition band, as described in the above-referenced patent.

The output signals of the filters 502 and 504 are mixed by the multipliers 506 and 510 and the adder 514, as described below. The output signal of the horizontal filter is subsampled by the horizontal subsampler 518, responsive to a control signal 519 provided by the processor 120. The horizontally subsampled signal is applied to a transpose memory 522 which switches the horizontal and vertical dimensions of the image. From the transpose memory 522, the signal is applied to a vertical filter 524, which may be identical to the horizontal filter 503. The output signal of the vertical filter 524 is, in turn, applied to a vertical subsampler 526, which reduces the vertical dimension of the image in a ratio determined by a control signal 527 provided by the processor 120.

The output signal 516 from adjustable filter 500 is applied to a frame synchronizer and then to the windows keyer 150, as previously described. The nature of the output signal 516 depends upon the controls exercised by the user through multipliers 506, 510 of the filter 503 and the corresponding multipliers of the filter 524 under the control of signal 520 provided by processor 120. This signal is, in turn, under the control of pull-down menu system 530. As described above, registers 508, 512, multipliers 506, 510 and adder 514 constitute the mixer segment of filter 503 or filter 524.

When a source, such as source 402, provides an input signal 501 to adjustable filter 500, the user may activate the pull-down menu system 530, resulting in pull-down menu selections 532. The bottom selection of pull-down menu selection 532 is "source." When the user selects "source" from pull-down menu selections 532, the user activates sub-menu 534 containing three choices. One choice in sub-menu 534 is "video," another choice is "graphics," and another choice is "mixed." Accordingly, if the signal 501 being supplied by the source is solely a video signal, the user may select "video" from sub menu 534. If signal 501 is solely a graphics signal, the user may select "graphics" from sub-menu 534. If signal 501 is both a video signal and a graphics signal, the user may select "mixed" from sub-menu 534. The selection of "video," "graphics," or "mixed" from sub-menu 534 determines the way in which signal 501 is filtered before becoming output signal 516.

The values stored in registers 508 and 512 by the processor 120 are determined in response to the selection made in sub-menu 534. Selecting "video" in sub-menu 534 causes a K=1 signal to be applied to line 520. Selecting "graphics" in sub-menu 534 causes a K=0 to be applied to line 520. Selecting "mixed" in sub-menu 534 causes a K=0.5 to be applied to line 520. Consequently, if "video" is selected, K=1 is applied to multiplier 506 through register 508, the output from graphics filter 502 is substantially attenuated, and the output signal provided to adder 514 consists mainly of the output from video filter 504. The resulting output signal 516 from adder 514 is then applied to window keyer 150.

Similarly, if the user selects "graphics" in sub-menu 534, K=0 is applied along line 520 to multipliers 506 and 510 causing the output of video filter 504 to be substantially attenuated by multiplier 510 and register 512. Consequently, the output signal provided to adder 514 consists mainly of the output from graphics filter 502. The resulting output signal 516 from adder 514 is then applied to window keyer 150. If the user selects "mixed" in sub-menu 534, K=0.5 is applied along line 520 to both multipliers 506, 510. In that case, output signal 516 is an equal combination of the output signals from graphics filter 502 and from video filter 504, the combination being made by adder 514. As explained above, therefore, adjustable filter 503 combines the output signals from graphics filter 502 and video filter 504 in proportions that are determined by the values of K which, in turn, are determined by the user's selection from pull-down menu 530. Although not explicitly described, the same analysis applies for filter 524.

Fig. 6 is a block diagram of yet another embodiment of a system according to the present invention in which a single filter is used to process the images from sources 602, 604, 606, 608, from the graphics card 138 and optionally from the secondary graphics card 139. This embodiment of the invention may be advantageous as it reduces the amount of signal processing performed to generate the composite image. In this embodiment, sources 602, 604, 606, 608 may supply any kind of data such video, graphics, text, and any combination thereof. The graphics cards 138 and 139 may provide single graphics images GO1 and GO3. Alternately, one graphics card 138 may provide multiple graphics images, for example, GO1 and GO2. Each of these graphic images may be, for example, a graphical output image produced by a respectively different computer program running on the computer 130.

Under the control of computer 130, any or all of signals from sources 602, 604, 606, 608, 138 and, optionally, 139 may be stored as full size images in memory 610. The signals stored in memory 610 are provided via memory output port 600 to window keyer 150 through programmable graphics/video filter and windower 620 and output frame store 621. Because all of the signals from sources 602, 604, 606, 608, GO1, G02 and GO3 are constantly stored and updated in memory 610, any and all of the source signals are always available to be supplied to filter 620. Transmission of any and all source signals from memory 610 to filter 620 is under the control of computer 130 as directed by the user of computer 130. Accordingly, filter 620 may receive only one signal from memory 610; or, it may receive a plurality of signals from memory 610 and perform a multiplex operation of the plurality of signals before providing them to output frame store 621 to be displayed on the display device 160.

Exemplary memory 610 stores the signals from sources 602, 604, 606, 608, GO1, GO2 and GO3 in different address ranges. Filter and windower 620 pulls out one or more image fragments from memory 610 and adjusts the size of each fragment based on instructions from the user as applied to computer 130 either directly or through optional processor 120. Filter and windower 620 then stores the resized image fragment at a location in the output frame store 621 determined by the computer 130. Filter 620 is controlled on the fly and may access any part of memory 610 at any time and store output data into any part of frame store 621 at any time. Filter and windower 620 may perform a variable resize operation on the output signals from sources using horizontal and vertical interpolation.

Programmable graphics/video filter 620 performs filtering using a graphics filter and a video filter identical to the graphics filter 502 and the video filter 504 described above with reference to Figure 5. The windowed signal provided by adaptive graphics/video filter 620 is displayed on display 160. Otherwise, the structure of the filter 620 may be the same as the filter 500, described above.

Figure 7 depicts the configuration of an exemplary adaptive graphics/video filter 700 that may be used in the programmable graphics/video filter portion of the filter and windower 620. This filter may be substituted for either or both of the filters 503 and 524, shown in Figure 5 to produce the programmable filter 620, shown in Figure 6. In the adaptive filter, the input signal to filter 700 comes from memory 610 via signal path 600. Signal path 600 supplies the output signal from memory 610 to an edge strength detector 720. Signal path 600 also supplies the output signal from memory 610 to filter 620 through a delay 710. Adaptive filter 700 consists of many of the same elements used in the configuration of the filter 503 shown in Figure 5A: graphics filter 502, video filter 504, multipliers 506, 612, registers 508, 512, and adder 514. The edge strength detector 720 in filter 700 helps compensate for ringing distortion that may occur near edges during vertical interpolation or horizontal interpolation. An exemplary edge strength detector is described in U.S. Patent No. 5,586,200 entitled "SEGMENTATION BASED IMAGE COMPRESSION SYSTEM." Edge strength detector 720 is connected to registers 508, 512. Edge strength detector 720 applies a compensation signal to registers 508, 512 to modify the signals applied to adder 514 from graphics filter 502 and video filter 504. Edge strength detector 720 may modify either, or both, graphics filter 502 and video filter 504 depending upon the strength (i.e. sharpness) of the edge. Edge strength detector 720 automatically adjusts the values K and 1-K stored in the registers 512 and 508 to preferably apply the video filter to parts of the image containing video data (i.e. data having relatively weak or blurred edges) and to preferably apply the graphics filter to parts of the image containing graphics data (i.e. data having relatively strong or well-defined edges). In the exemplary embodiment of the invention, value of K is proportional to the edge strength. It is contemplated, however, that the value K may be determined by some other function of the edge strength, for example, the square or square-root of the edge strength. Delay 710 is inserted between signal 600 and the remainder of adaptive filter 700 to accommodate the time needed by the edge strength detector 720 to analyze signal 600.

The operation of the embodiment shown in Figure 6 in conjunction with adaptive graphics/video filter 700 shown in Figure 7 may be understood by reference to Figure 2A. As described above, Figure 2A depicts an exemplary embodiment of a display screen containing different sized images 210, 212, 214, 216 on top of a background 200. The embodiment of images shown in Figure 2A may comprise, for example, an image 210 which has been reduced by a factor of "A," an image 212 which has been reduced by a factor of "B," an image 214 which has been reduced by a factor of "C," an image 216 which has been reduced by a factor of "D," and a background 200 which has not been reduced at all. It will be understood that display device 160 may simultaneously contain a fewer number of images.

In the exemplary embodiment shown in Figure 6, processor 120 may scan across the output image as it is to be displayed on the screen of display device 160. The processor 120 may control the filter and windower 620 to extract individual blocks of each of each image, as it is encountered in the scan order of the image. The processor 120 provides the filter and windower 620 with parameters describing where the various images are located in memory 610, how they are to be formatted for display and where they are to be located in the output frame store 621. This data is then processed by the filter and windower 620 to generate corresponding blocks of the output image which are stored into the output frame store 621 at the specified locations.

Alternatively, the PC 130 or the optional processor 120 may receive the parameters describing the locations of successive images in memory 610. The filter and windower 620 may process each of these images separately, storing each processed image into its desired location in the output frame store 621 so that images which are "behind" other images in the displayed composite image are processed first and are overwritten by the later-processed overlay images. This method is not synchronized with the display of the image from the memory. The exemplary memory 621 may be, for example, a dual-port memory that may be independently written to and read from concurrently. Thus, while the image is being built by the filter and windower 620, one component at a time, the composite image may be displayed on the display device 160. In a device of this type, it may be desirable for memory 621 to include more than a single frame of memory so that a complete composite image frame exists for display while the next composite image is being formed.

Computer 130, using the memory control signal MC, or processor 120 controls the memory 610 to fetch appropriate pixel values for each image that is to be processed, as it is encountered in the scanning of the image or in the desired overlay window structure. The filter and windower 620 dynamically resizes each image in the horizontal direction and stores the result in the transpose memory 522 (shown in Figure 5). Each image is then accessed from the transpose memory by the vertical filter 524, implemented as shown in Figure 7, to produce the final resized images. These images are provided to the output frame store 621, as described above.

It will be understood by those skilled in the art that adaptive filter portion of the filter and windower 620 may be either the configuration described in Figure 7 or that it may be other filters that are part of the prior art. A filter must be selected to perform the function of adaptive graphics/video filter 620 that will able to variably process the entire image received from memory 610.

Although the invention has been described in terms of the filters and format converters being implemented as hardware devices, it is contemplated that the invention may be implemented in software on a general purpose computer. In this embodiment, the functions of the various filters, format converters and even the window keyer 150 may be implemented in software that controls the general purpose computer. This software may be embodied in a computer readable carrier, for example, a magnetic or optical disk, a memory-card or an audio frequency, radio-frequency or optical carrier wave.

Although the invention has been described in terms of an exemplary embodiment, it is contemplated that it may be practiced as described above with variations within the knowledge and skill of a person ordinarily skilled in the art and within the scope of the appended claims.

## Claims

1. A system for simultaneously displaying multiple images on a single display, said system comprising:
a plurality of format converters, each one of said plurality of format converters being coupled to receive a respective one of said multiple images each format converter scaling the image it receives in response to a control signal to produce a respective scaled image;
a processor coupled to said plurality of format converters for generating the control signals for the plurality of format converters responsive to desired sizes for the respective multiple images; and
a window keyer, coupled to said plurality of format converters and to said processor, for defining a window for each one of said multiple images on the single display and for merging the scaled images provided by the format converters into the respective defined windows to produce the single display.

2. A system according to claim 1 further including a plurality of frame synchronizers coupled between the plurality of format converters and the window keyer, respectively, for synchronizing the respective scaled images provided by the format converters for display on a display device.

3. A system according to claim 1, further comprising a graphics processor coupled to said window keyer, said graphics processor providing a base image that includes the windows for said multiple images, respectively wherein the window keyer merges the multiple images into the respective windows.

4. A system according to claim 1, wherein:
said multiple images comprise images of different types;
the plurality of format converters include a respective plurality of adjustable image resizing filters each of which is configured to process the images of each of the different types responsive to a control signal; and
the processor is configured to provide the control signals to the plurality of format converters responsive to the respective image types provided to the format converters.

5. A system for simultaneously displaying a plurality of images of different types on a single display, said system comprising:
a routing switch having input ports coupled to receive the plurality of images, respectively;
a plurality of graphics image resizing filters coupled to respective output ports of the routing switch;
a plurality of format converters coupled to respective output ports of the routing switch;
control means, coupled to said plurality of graphics image resizing filters, to said plurality of format converters, and to said switch, for causing said switch to couple at leas one of said images to at least one of said plurality of graphics image resizing filters and at least one of said images to at least one of said plurality of format converters; and
a window keyer, coupled to said plurality of graphics image resizing filters, to said plurality of format converters, and to said control means, for defining a respective window for each one of said plurality of images.

6. A system according to claim 5, wherein the control means includes a processor and the processor assigns each of the plurality of images to a respective one of the plurality of graphics image resizing filters and the plurality of format converters.

7. A system according to claim 6, wherein the control means includes an interface for receiving commands from a user to assign each of the images to a respective one of the plurality of graphics image resizing filters and the plurality of format converters.

8. A system according to claim 7, wherein the control means controls the windows keyer, and each of the plurality of graphics image resizing filters and the plurality of format converters, responsive to further user commands, to define a position and size for each of the plurality of images.

9. A system for simultaneously displaying multiple images of different types as a single displayed image, said system comprising:
a memory coupled to a plurality of image sources, each image source providing an image of at least one of the different types;
an adaptive resizing filter coupled to said memory for receiving said multiple images from said memory and for resizing each of said multiple images to produce a plurality of resized images; and
a frame memory coupled to the adaptive resizing filter for storing each of the plurality of resized images in a predetermined location to produce data representing said single displayed image.

10. A system according to claim 9, wherein said adaptive filter formats said multiple images in blocks responsive to a signal indicating the resizing to be applied to each of the multiple images and the predetermined locations of each of the multiple images in the frame memory.

11. A system according to claim 9, wherein:
said adaptive filter formats each of said multiple images separately, responsive to a signal indicating the resizing to be applied to each of the multiple images; and
and said adaptive filter stores the multiple images into the frame memory such that ones of the multiple images that overlay other ones of the multiple images in the single displayed image are processed after the other ones of the multiple images and overwrite portions of the other ones of the multiple images in the frame memory.

12. A system according to claim 9, wherein said adaptive resizing filter includes a mixer;
a graphics resizing filter coupled to said memory for resizing said multiple images according to a graphics resizing algorithm to provide a first output signal to said mixer, and
a video resizing filter coupled to said memory for resizing said multiple images according to a video resizing algorithm to provide a second output signal to said mixer,
wherein said mixer mixes corresponding pixels from said first output signal and said second output signal responsive to a control signal to produce each of the plurality of resized images to be stored into the frame memory.

13. The system of claim 12, wherein said adaptive resizing filter includes an edge strength detector, responsive to the multiple images provided by the memory, for identifying high-frequency components of each of the multiple images to control the mixer to provide predominantly the first output signal in response to the high frequency components.

14. A method for simultaneously displaying multiple images on a single display, said method comprising:
receiving respective ones of said multiple images at respective ones of multiple format converters;
defining a respective scale and position of a window for each of said multiple images; and
concurrently filtering said multiple images to produce multiple filtered images that conform to the respective scales; and
concurrently displaying said multiple filtered images in the respective defined positions.

15. A method for simultaneously displaying a plurality of images of different types as a single display, said method comprising:
defining a respective scale and position of a window for each one of said plurality of images; and
routing each of said plurality of images to a respectively different one of a plurality of graphics filters and a plurality of video filters responsive to the type of the image to produce multiple filtered images that conform to the respective scales; and
concurrently displaying said multiple filtered images in the respective defined positions.

16. A method for simultaneously displaying multiple images of different types as a single displayed image, comprising the steps of:
storing the multiple images into respectively different locations of a memory;
resizing each of said multiple images in a single filter to produce a plurality of resized images; and
storing the plurality of resized images into a frame memory in respective predetermined locations to produce said single displayed image.

17. A method according to claim 16, wherein the step of resizing each of the multiple images includes the step of resizing each of said multiple images in blocks responsive to a signal indicating the resizing to be applied to each of the multiple images and the predetermined locations of each of the multiple images in the frame memory.

18. A method according to claim 16, wherein the step of resizing each of the multiple images includes the steps of:
resizing each of said multiple images separately, responsive to a signal indicating the resizing to be applied to each of the multiple images; and
storing the multiple images into the frame memory such that ones of the multiple images that overlay other ones of the multiple images in the single displayed image are processed after the other ones of the multiple images and overwrite portions of the other ones of the multiple images in the frame memory.

19. A computer readable medium including software that is configured to contro a general purpose computer to implement a method for simultaneously displaying multiple images on a single display, said method comprising;
receiving respective ones of said multiple images at respective ones of multiple format converters;
defining a respective scale and position of a window for each of said multiple images; and
concurrently filtering said multiple images to produce multiple filtered images that conform to the respective scales; and
concurrently displaying said multiple filtered images in the respective defined positions.

20. A computer readable medium including software that is configured to control a general purpose computer to implement a method for simultaneously displaying a plurality of images of different types as a single display, said method comprising:
defining a respective scale and position of a window for each one of said plurality of images; and
filtering the plurality of video filters responsive to the type of the image to produce multiple filtered images that conform to the respective scales; and
concurrently displaying said multiple filtered images in the respective defined positions.

21. A computer readable medium including software that is configured to control a general purpose computer to implement a method for simultaneously displaying multiple images of different types as a single displayed image, comprising the steps of:
storing the multiple images into respectively different locations of a memory;
resizing each of said multiple images in a single filter to produce a plurality of resized images; and
storing the plurality of resized images into a frame memory in respective predetermined locations to produce said single displayed image.
